Europäisches Patentamt

**European Patent Office**

**Office européen des brevets**

(11) Numéro de publication: **0 207 434**
**A2**

(12) # DEMANDE DE BREVET EUROPEEN

(21) Numéro de dépôt: **86108649.4**

(22) Date de dépôt: **25.06.86**

(51) Int. Cl.⁴: **B 65 G 47/91**

(30) Priorité: **02.07.85 CH 2863/85**

(43) Date de publication de la demande:
**07.01.87 Bulletin 87/2**

(84) Etats contractants désignés:
**DE FR GB**

(71) Demandeur: **Schlup, Gustave-Edouard**
**Beudenstrasse 12**
**CH-2543 Longeau-près-Bienne(CH)**

(72) Inventeur: **Schlup, Gustave-Edouard**
**Beudenstrasse 12**
**CH-2543 Longeau-près-Bienne(CH)**

(74) Mandataire: **Robert, Jean S.**
**51, route du Prieur**
**CH-1257 Landecy (Genève)(CH)**

(54) **Appareil de préhension travaillant par aspiration.**

(57) Lorsqu'une pression est exercée sur la buse (6), dans le sens de la flèche (15), la buse se déplace axialement, amenant son canal central (12) à entrer en communication, par un passage radial (16), et par des évents (17), avec l'atmosphère ambiante. La dépression cesse dès lors de régner à l'intérieur de la buse (6) et toute pièce portée par la buse est alors relâchée. La buse (6) est montée rotativement dans sa monture (5) et porte un poulet de commande (18) qui permet de la faire tourner sur elle-même à l'aide d'un doigt. L'opérateur peut ainsi orienter la pièce saisie par la buse (6) afin de la présenter à son lieu d'utilisation dans l'orientation voulue.

FIG. 1

EP 0 207 434 A2

- 1 -

## Appareil de préhension travaillant par aspiration.

La présente invention a pour objet un appareil de préhension travaillant par aspiration.

De tels appareils, appelés familièrement "pipettes" par analogie aux pipettes utilisées en chimie, servent à saisir de petites pièces pour les transporter et les présenter à l'endroit où elles doivent être utilisées.

Le plus généralement, les pièces transportées doivent être présentées dans une orientation déterminée là où elles sont utilisées, ce qui n'est guère possible avec les appareils de préhension usuels dans lesquels l'aspiration, à l'orifice de la buse, s'obtient en bouchant, de l'index, un évent mettant la buse en communication avec l'atmosphère ambiante. On ne peut, l'index étant posé sur ledit évent, modifier l'orientation de la pièce transportée que par une contorsion de la main d'amplitude nécessairement limitée. Il faut donc, dans certains cas, procéder par étapes et reposer, entre chaque reprise, la pièce transportée sur le plan de travail pour la ressaisir dans une position de la main différente.

0207434

Le but de la présente invention est de remédier à cet inconvénient.

Ce but est atteint grâce aux moyens définis dans la revendication 1.

Le dessin représente, à titre d'exemple, une forme d'exécution de l'objet de l'invention.

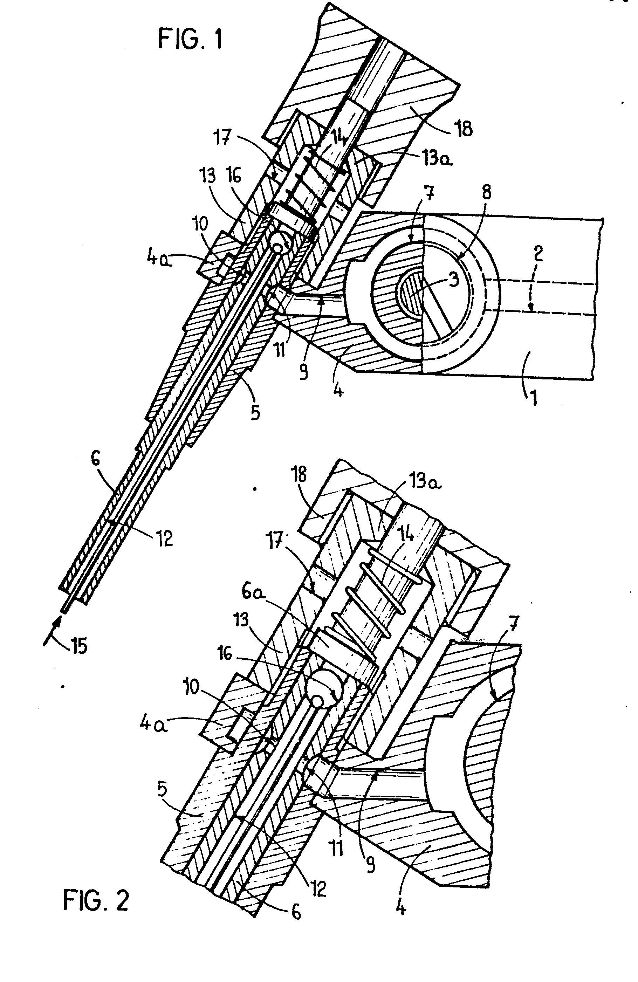

La figure 1 est une vue en élévation, avec coupe partielle, d'un appareil de préhension travaillant par aspiration, agrandi environ quatre fois, et

La figure 2 représente un détail de la figure 1 à échelle encore agrandie.

L'appareil représenté comprend un corps 1 percé d'un canal central 2 destiné à se brancher sur une source de dépression. Ce corps 1 constitue, dans l'exemple représenté, une pièce à main, mais il pourrait également être agencé de façon à être fixé à un organe mobile d'une machine.

Le corps 1 porte, articulée en 3 au voisinage de son extrémité, une tête 4 se prolongeant par une bride 4a dans laquelle est engagé un manchon 5 supportant une buse d'aspiration 6. La face de la tête 4 en contact avec le corps 1 présente une gorge annulaire 7 située en regard d'une gorge annulaire 8 que présente la face du corps 1 en contact avec la tête 4. Ces deux gorges forment ensemble une chambre annulaire dans laquelle débouchent le conduit 2 d'une part et un conduit 9 ménagé dans la tête 4 d'autre part. Ce conduit 9 débouche dans une chambre annulaire 10 ménagée entre la buse et le manchon 5, grâce à une gorge extérieure que présente la buse; cette chambre 10 communique, par des passages radiaux 11 ménagés dans la buse, avec le canal central de celle-ci, désigné par 12. Ainsi la dépression règne dans la buse quelle que soit la position angulaire de la tête 4 par rapport au corps 1.

Le manchon 5 porte, se vissant sur son extrémité postérieure, une douille 13 le maintenant en place dans la bride 4a et qui est traversée par l'extrémité postérieure de la buse 6. Un ressort à boudin 14 engagé sur la buse 6 est logé dans la douille 13, interposé entre le fond 13a de celle-ci et un épaulement 6a que présente la buse. Lorsqu'une pression est exercée axialement sur la buse 6, dans le sens de la flèche 15, la buse est déplacée axialement

- 4 -

à l'encontre de l'action du ressort de rappel 14. La tête 6a de la buse se sépare alors de l'extrémité du manchon 5, mettant en communication, grâce à un trou radial 16 pratiqué dans la douille, le canal central 11 de celle-ci avec l'intérieur de la douille 13. Des évents 17 faisant communiquer l'intérieur de la douille 13 avec l'atmosphère ambiante, le déplacement axial de la buse 6 interrompt la dépression à l'embouchure de celle-ci.

La buse 6 est montée rotativement dans le manchon 5 et porte, engagé sur son extrémité postérieure, un poulet de commande 18 qui permet, à l'aide d'un seul doigt, de faire tourner la buse sur elle-même.

Le présent appareil s'utilise de la façon suivante :

L'opérateur, tenant le corps 1 dans la main, présente l'orifice de la buse 6 en regard de la pièce à saisir et l'en approche jusqu'à ce que celle-ci soit aspirée par la dépression régnant dans la buse. Il transporte alors la pièce saisie par la buse et la présente à l'emplacement où elle doit être utilisée. De l'index, en agissant sur le poulet 18, l'opérateur peut faire tourner la buse 6 sur elle-même et, par conséquent, la pièce que porte celle-ci de façon à présenter celle-ci dans l'orientation voulue.

L'opérateur pose alors la pièce à l'endroit
où elle doit se trouver puis il exerce une légère pression
de la buse sur la pièce, ce qui déplace la buse dans le
sens de la flèche 15 et provoque l'interruption de la dépression dans la buse. La pièce est ainsi libérée et il suffit à l'opérateur d'incliner légèrement l'appareil pour que,
lorsqu'il retire ce dernier, la pièce ne soit pas saisie
à nouveau au moment où la buse ayant repris sa position de
travail sous l'effet du ressort 14, la dépression se rétablit à l'intérieur de la buse.

- 6 -

REVENDICATIONS :

1. Appareil de préhension travaillant par aspiration, caractérisé par le fait qu'il comprend une buse d'aspiration montée sur l'organe qui la supporte de façon à pouvoir coulisser axialement, ce qui lui permet d'occuper une position de travail dans laquelle son canal central est en liaison avec un conduit de l'appareil destiné à être relié à une source de dépression, et une position rétractée dans laquelle la dépression à son orifice d'aspiration est interrompue, ladite buse étant en outre montée rotativement sur son support, ce qui permet de la faire tourner sur elle-même en vue d'orienter la pièce saisie par aspiration.

2. Appareil suivant la revendication 1, caractérisé par le fait que ladite buse est solidaire d'un poulet de commande de sa rotation.

3. Appareil suivant la revendication 1, caractérisé par le fait qu'un dispositif élastique de rappel tend à maintenir ladite buse dans sa position de travail.

4. Appareil suivant la revendication 1, caractérisé par le fait que, en position rétractée de ladite buse, le canal central de celle-ci est en liaison avec au moins un évent ouvrant sur l'atmosphère de telle sorte qu'aucune dépression ne règne à son orifice d'aspiration.

- 7 -

5. Appareil suivant la revendication 1, caractérisé par le fait que sa buse présente, extérieurement, une gorge annulaire formant, avec le support de la buse, une chambre annulaire en liaison avec le canal central de la buse, dans laquelle débouche le conduit apte à être relié à une source de dépression, de manière que la dépression règne dans la buse, quelle que soit la position angulaire de celle-ci.

6. Appareil suivant la revendication 1, caractérisé par le fait que la buse est montée sur le corps de l'appareil de façon à pouvoir tourner autour d'un axe perpendiculaire au sien, ce qui permet de modifier son orientation et de l'adapter aux conditions de travail.

7. Appareil suivant la revendication 6, caractérisé par le fait qu'elle comprend deux éléments articulés l'un sur l'autre autour d'un axe perpendiculaire à l'axe de la buse présentant chacun , sur leur face en contact avec l'autre, une gorge annulaire, ces deux gorges annulaires formant ensemble une chambre annulaire dans laquelle débouchent d'une part le conduit apte à être relié à une source de dépression et d'autre part un conduit menant à la buse, de façon que la dépression règne dans celle-ci quelle que soit l'orientation de la buse par rapport au corps de l'appareil.

- 8 -

8. Appareil suivant la revendication 1, caractérisé par le fait que le corps de l'appareil est une pièce à main.

9. Appareil suivant la revendication 1, caractérisé par le fait que le corps de l'appareil est agencé de façon à être fixé à un élément de machine.

FIG. 1

FIG. 2